# EUROPEAN PATENT APPLICATION

(11) **EP 4 485 387 A1**
(43) Date of publication of application: **01.01.2025**
(21) Application number: 24181341.9
(22) Date of filing: 11.06.2024
(51) Int. Cl.: G06V 20/52

(54) **INFORMATION PROCESSING PROGRAM, INFORMATION PROCESSING METHOD, AND INFORMATION PROCESSING DEVICE**

(30) Priority: 26.06.2023 JP 2023104500
(71) Applicant: Fujitsu Limited, Kawasaki-shi, Kanagawa 211-8588 (JP)
(72) Inventor: KIMURA, Yoshie, Kawasaki-shi, Kanagawa, 211-8588 (JP); KOHATA, Shun, Kawasaki-shi, Kanagawa, 211-8588 (JP)
(74) Representative: Hoffmann Eitle

(57) **Abstract**

An information processing program including instructions which, when executed by a computer, cause the computer to execute processing including: acquiring a video image captured by one or more camera devices; specifying, by analyzing the acquired video image, a relation that identifies an interaction between an object and a person included in the video image; determining, based on the specified relation, whether a first object is placed outside an imaging range of the camera device; and issuing an alert, based on a determination result obtained by the determining of whether the first object is placed outside the imaging range.

## Description

### FIELD

The embodiments discussed herein are related to an information processing program, an information processing method, and an information processing device that identify a person who performs an abnormal behavior, and identify the behavior, from video images.

### BACKGROUND

For example, there is a technology for identifying a person who performs an abnormal behavior such as illegal dumping or placement of a suspicious object, from a surveillance video image of the inside of any one of various facilities such as a factory through image recognition by a computer, and issuing an alert as an abnormality notification. By this technology, occurrence of an accident or incident can be prevented in advance.

Such a technology is designed to extract bounding boxes (Bboxes) that rectangularly surround regions including an object and a person from a video image, using a machine learning model, for example, and determine whether or not the person is performing an abnormal behavior based on a positional relation between both Bboxes.

Examples of the related art include Japanese Laid-open Patent Publication No. 2022-165483.

### SUMMARY

### TECHNICAL PROBLEM

However, it is not possible to detect a person or an object in a blind spot for a surveillance camera, and therefore, it is not easy to accurately determine an abnormal behavior of a person from a video image. Note that a blind spot for a surveillance camera may be a blind spot that appears between the imaging ranges of a plurality of cameras in a case where different areas are imaged by the plurality of cameras, or may be a blind spot that appears outside the imaging range of a single camera such as an oscillating camera, for example.

In one aspect, an objective is to provide an information processing program, an information processing method, and an information processing device that is capable of accurately determining and notifying that a person is performing an abnormal behavior, from a video image.

### SOLUTION TO PROBLEM

According to an aspect of the embodiments, there is provided an information processing program including instructions which, when executed by a computer, cause the computer to execute processing including: acquiring a video image captured by one or more camera devices; specifying, by analyzing the acquired video image, a relation that identifies an interaction between an object and a person included in the video image; determining, based on the specified relation, whether a first object is placed outside an imaging range of the camera device; and issuing an alert, based on a determination result obtained by the determining of whether the first object is placed outside the imaging range.

### ADVANTAGEOUS EFFECTS OF INVENTION

In one aspect, it is possible to accurately determine and notify that a person is performing an abnormal behavior from a video image.

### BRIEF DESCRIPTION OF DRAWINGS

FIG. 1 is a diagram illustrating an example of imaging by surveillance cameras;
FIG. 2 is a diagram illustrating another example of imaging by surveillance cameras;
FIG. 3 is a diagram illustrating an example configuration of an information processing system 1 according to the present embodiment;
FIG. 4 is a diagram illustrating an example configuration of an information processing device 10 according to the present embodiment;
FIG. 5 is a diagram illustrating an example of information stored in a camera installation DB 14 according to the present embodiment;
FIG. 6 is a diagram illustrating an example of information stored in a rule DB 16 according to the present embodiment;
FIG. 7 is a diagram illustrating an example of relation specification based on a scene graph according to the present embodiment;
FIG. 8 is a diagram for explaining a problem in scene graph generation;
FIG. 9 is a diagram illustrating an example of Attention map generation according to the present embodiment;
FIG. 10 is a diagram illustrating an example of an NN configuration for estimating a relation according to the present embodiment;
FIG. 11 is a diagram illustrating an example of image feature extraction according to the present embodiment;
FIG. 12 is a diagram illustrating an example of object detection according to the present embodiment;
FIG. 13 is a diagram illustrating an example of pair feature amount generation according to the present embodiment;
FIG. 14 is a diagram illustrating an example of relation feature extraction according to the present embodiment;
FIG. 15 is a diagram illustrating an example of relation estimation according to the present embodiment;
FIG. 16 is a diagram illustrating an example of skeletal information according to the present embodiment;
FIG. 17 is a diagram illustrating an example of whole-body posture determination according to the present embodiment;
FIG. 18 is a diagram illustrating an example of detection of motion of each part according to the present embodiment;
FIG. 19 is a diagram illustrating an example of projective transform coefficient calculation according to the present embodiment;
FIG. 20 is a diagram illustrating an example of transform from an image coordinate system to a floor map coordinate system according to the present embodiment;
FIG. 21 is a flowchart illustrating a flow of an abnormal behavior notification process according to the present embodiment;
FIG. 22 is a flowchart illustrating a flow of a relation estimation process according to the present embodiment; and
FIG. 23 is a diagram for explaining an example hardware configuration of the information processing device 10.

### DESCRIPTION OF EMBODIMENTS

In the description below, examples of an information processing program, an information processing method, and an information processing device according to the embodiments will be described in detail with reference to the drawings. Note that the embodiments are not limited by these examples. Further, the respective examples may be appropriately combined within a range without inconsistency.

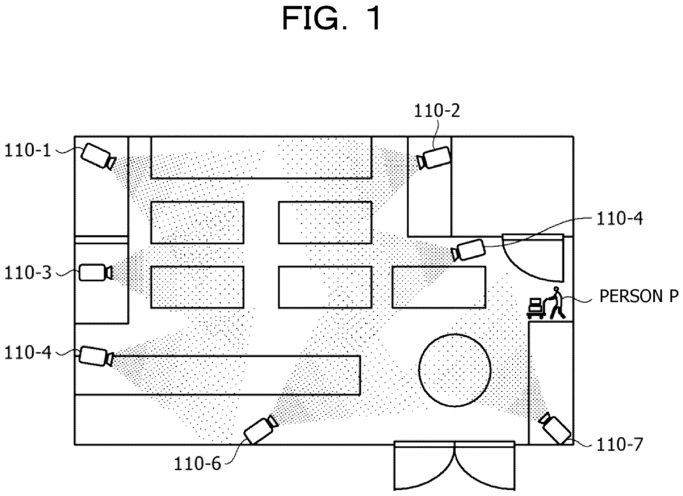

First, imaging by surveillance cameras and blind spots in the imaging ranges are described. FIG. 1 is a diagram illustrating an example of imaging by surveillance cameras. FIG. 1 is an example of a case where any one of various facilities such as a factory is imaged by camera devices 110-1 to 110-7 (hereinafter collectively referred to as the "camera devices 110") that are a plurality of surveillance cameras. Also, in FIG. 1, the camera devices 110 are stationary cameras, and approximate imaging ranges of the camera devices 110 are the portions indicated by halftone dots.

Depending on the number of installed camera devices 110 and the scale of the facility to be imaged, not a few blind spots appear in the imaging ranges of the camera devices 110. In FIG. 1, for example, the position at which a person P is present is a blind spot that is located between imaging ranges and is not captured in any of the imaging ranges of the camera devices 110-1 to 110-7. For example, when the person P performs an abnormal behavior such as illegal dumping or placement of a suspicious object at such a position, it is difficult to determine whether or not the person P has performed an abnormal behavior by a conventional method for performing image recognition by detecting an object or a person from video images captured by the camera devices 110.

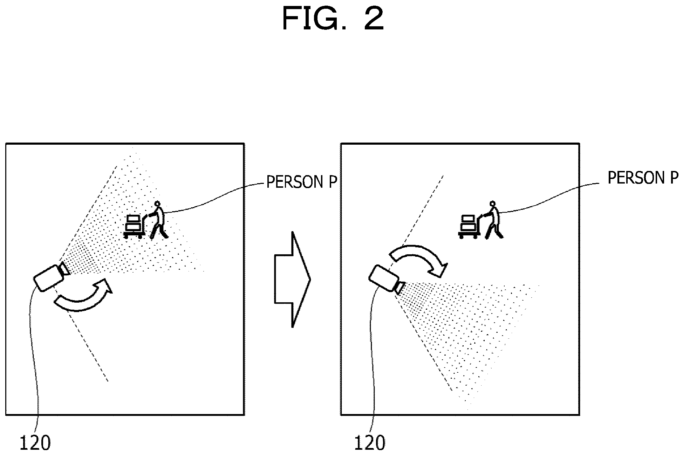

FIG. 2 is a diagram illustrating an example of imaging by surveillance cameras. Like FIG. 1, FIG. 2 illustrates a camera device 120 that is a surveillance camera that captures images in any one of various facilities such as a factory. However, the camera device 120 is a so-called oscillating camera. Therefore, as illustrated in FIG. 2, the imaging range of the camera device 120 moves in the range indicated by dashed lines, for example.

Since the imaging range of the camera device 120 moves in this manner, a location that is imaged at a certain time is out of the imaging range and is a blind spot at some other timing. For example, a person P is captured in the imaging range of the camera device 120 on the left side in FIG. 2, but the person P is not captured due to the movement of the imaging range on the right side in FIG. 2. For example, when the person P performs an abnormal behavior such as illegal dumping or placement of a suspicious object at such timing as illustrated on the right side in FIG. 2, it is difficult to determine whether or not the person P has performed an abnormal behavior by a conventional method as in the case with a plurality of camera devices 110 illustrated in FIG. 1.

### (Overall Configuration)

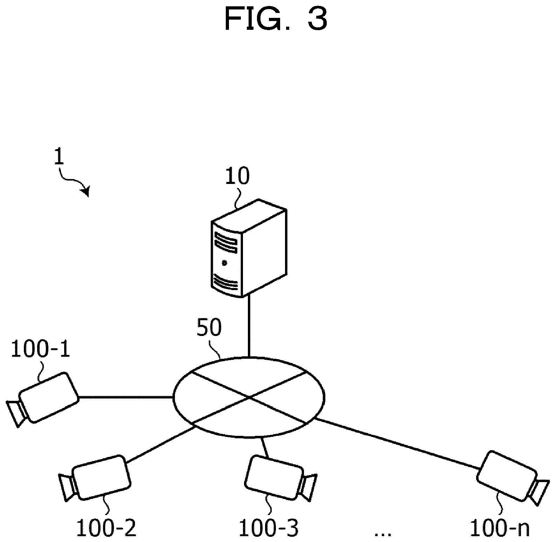

Next, an information processing system according to the present embodiment is described. FIG. 3 is a diagram illustrating an example configuration of an information processing system 1 according to the present embodiment. As illustrated in FIG. 3, the information processing system 1 is a system in which an information processing device 10 and camera devices 100-1 to 100-n (n being an appropriate natural number) are communicably coupled to each other via a network 50. Note that the camera devices 100-1 to 100-n will be hereinafter collectively referred to as the "camera devices 100".

As the network 50, for example, various communication networks such as an intranet that is used in any one of various facilities such as a factory, or the Internet can be adopted, regardless of whether or not the network is wired or wireless. Also, as the network 50, instead of a single network, an intranet and the Internet may be configured via a network device such as a gateway or other devices (not illustrated), for example. Note that the expression "in facilities" is not limited to indoor cases and may include outdoor cases.

The information processing device 10 is an information processing device such as a desktop personal computer (PC) or a notebook PC that is provided in any one of various facilities such as a factory and is used by security staff or the like, or a server computer, for example. Alternatively, the information processing device 10 may be a cloud computer device that is managed by a service provider that provides cloud computing services.

The information processing device 10 receives, from the camera devices 100, video images obtained by the camera devices 100 imaging a predetermined imaging range in any one of various facilities such as a factory, for example. Note that, strictly speaking, the video images each include a plurality of images captured by the camera device 100, which is a series of frames of a moving image.

Also, the information processing device 10 extracts an object including a person in any one of various facilities such as a factory, from the video images captured by the camera devices 100, using an existing object detection technology, for example. Note that extracting an object from a video image may be extracting bounding boxes (Bboxes) that rectangularly surround regions including an object and a person from a video image, for example. Further, the information processing device 10 specifies a relation identifying an interaction between the object and the person, such as the person holding, pushing, or carrying the object, for example.

Further, the information processing device 10 determines whether or not the person is performing an abnormal behavior, based on the specified relation between the object and the person, for example. Here, an abnormal behavior refers to illegal dumping, placement of a suspicious object, or the like, for example, and in particular, the information processing device 10 determines whether or not the person has performed an abnormal behavior outside the imaging range of the camera device 100, based on the specified relation between the object and the person.

Then, when determining that the person has performed an abnormal behavior, for example, the information processing device 10 then issues an alert related to appearance of a person who has performed an abnormal behavior. Note that the alert is merely a warning, and the person who has performed an abnormal behavior may be a suspicious person who has a possibility of having performed an abnormal behavior, for example. Also, the alert may be a voice output, a message notification on a screen, or the like, for example. Further, an alert issuance destination may be an output device included in the information processing device 10, an external device, or another output device or the like communicably coupled to the information processing device 10 via the network 50, for example.

Also, the information processing device 10 may specify the location of the person performing an abnormal behavior based on the installation location or the like of the camera device 100 that has captured the video image in which the relation between the object and the person is specified, for example, and limit alert issuance destinations. Note that limiting alert issuance destinations means limiting the alert issuance to an information processing terminal being carried by a security guard or the like near the place of the person who is performing an abnormal behavior, a PC provided near the place of the person who is performing an abnormal behavior, or the like, for example.

Then, the security staff or the like in any one of various facilities such as a factory then receives the issued alert, and stops the abnormal behavior by warning the person who is performing the abnormal behavior or the like. Thus, an occurrence of illegal dumping, placement of a suspicious object, or the like can be prevented in advance.

Note that, although FIG. 3 illustrates the information processing device 10 as one computer, the information processing device 10 may be a distributed computing system including a plurality of computers.

The camera devices 100 are surveillance cameras installed in any one of various facilities such as a factory, for example. The camera devices 100 may be the camera devices 110 that are a plurality of surveillance cameras as described with reference to FIG. 1 and FIG. 2, the camera device 120 that is an oscillating camera, or the like, for example. Note that, although a plurality of the camera devices 100 is illustrated in FIG. 3, a single camera device 100 may be used depending on the scale of the imaging range or in a case where the camera device 100 is an oscillating camera or the like. Also, the camera devices 100 transmit captured video images to the information processing device 10, for example.

### (Functional Configuration of the Information Processing Device 10)

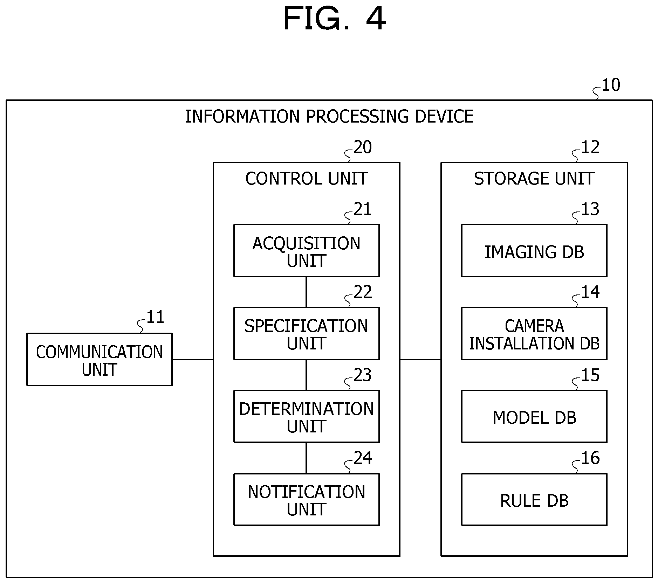

Next, the functional configuration of the information processing device 10 is described. FIG. 4 is a diagram illustrating an example configuration of the information processing device 10 according to the present embodiment. As illustrated in FIG. 4, the information processing device 10 includes a communication unit 11, a storage unit 12, and a control unit 20.

The communication unit 11 is a processing unit that controls communication with other devices such as the camera devices 100, and is a communication interface such as a network interface card, for example.

The storage unit 12 has a function of storing various kinds of data and programs to be executed by the control unit 20, and is formed with a storage device such as a memory or a hard disk, for example. The storage unit 12 stores an imaging DB 13, a camera installation DB 14, a model DB 15, a rule DB 16, and the like. Note that DB is an abbreviation for database.

The imaging DB 13 stores a plurality of captured images that is a series of frames captured by the camera devices 100. The plurality of captured images captured by the camera devices 100, which are video images, is transmitted from the camera devices 100 as needed, is received by the information processing device 10, and is stored into the imaging DB 13.

The camera installation DB 14 stores information to be used to specify places at which the respective camera devices 100 are installed, for example. The information stored herein may be set beforehand by an administrator or the like of the information processing system 1, for example.

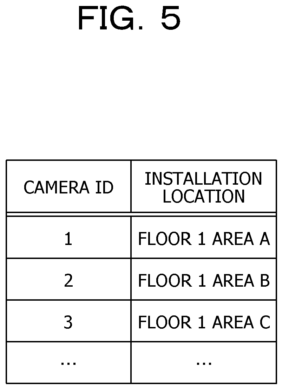

FIG. 5 is a diagram illustrating an example of the information stored in the camera installation DB 14 according to the present embodiment. As illustrated in FIG. 5, in the camera installation DB 14, the respective pieces of information such as "camera ID, installation location" are associated with each other and are stored, for example. In the "camera ID" stored herein, information such as identifiers for uniquely identifying the respective camera devices 100 is set, for example. In the "installation location", information for specifying the places at which the respective camera devices 100 are installed is set, for example. Note that, in a case where only one camera device 100 is installed or the like, the camera installation DB 14 does not need to be included in the storage unit 12.

The model DB 15 stores information regarding a machine learning model for specifying regions including an object and a person from a video image captured by the camera devices 100 and a relation between the object and the person, and a model parameter for constructing the model, for example. The machine learning model is generated through machine learning using a video image captured by the camera devices 100, which are captured image, as input data, and regions including an object and a person, and the type of the relation between the object and the person as correct labels, for example. Note that the type of the relation between the object and the person may be the person holding, pushing, carrying the object, or the like, for example. However, the type is not limited to these actions. Further, the regions including the object and the person may be bounding boxes (Bboxes) that rectangularly surround those regions in a captured image, for example.

Also, the model DB 15 stores information regarding a machine learning model for acquiring, from a video image, the types of objects for generating a scene graph, and the relation between the objects, and a model parameter for constructing the model, for example. Note that the type of an object for generating a scene graph may be referred to as the "class", and a relation between objects may be referred to as the "relation". Further, the machine learning model is generated through machine learning using a video image captured by the camera devices 100, which are captured images, as input data, and the locations of objects (Bboxes) included in the captured image, the types of the objects, and the relation between the objects as correct labels.

Also, the model DB 15 stores information regarding a machine learning model for generating an Attention map described later, and a model parameter for constructing the model, for example. The machine learning model is trained and generated, using feature amounts of objects detected from a captured image as input data, and important regions in the image as correct labels, for example. Note that various machine learning models may be trained and generated by the information processing device 10, or may be trained and generated by another information processing device.

The rule DB 16 stores information regarding rules for determining that a person is performing an abnormal behavior, for example. The information stored herein may be set beforehand by an administrator or the like of the information processing system 1, for example.

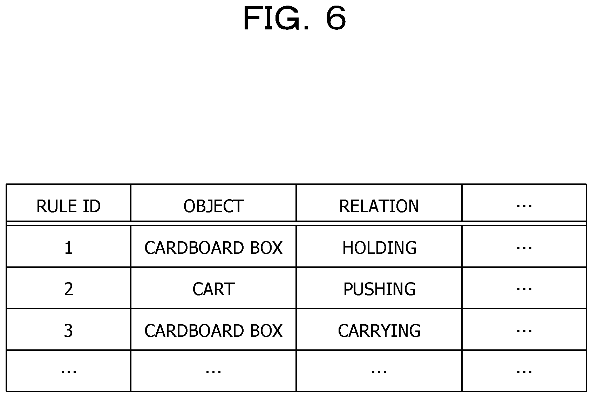

FIG. 6 is a diagram illustrating an example of the information stored in the rule DB 16 according to the present embodiment. As illustrated in FIG. 6, in the rule DB 16, the respective pieces of information such as "rule ID, object, relation" are associated with each other and stored, for example. In the "rule ID" stored herein, information such as identifiers for uniquely identifying rules are set, for example. Also, in the "object", the names of objects or the like are set, for example. Further, in the "relation", the types of relations between the object and the person are set, for example.

For example, in a case where a person detected from a video image indicates a relation set to the "relation" regarding an object set in the "object" in the rule DB 16, the information processing device 10 can determine that there is a possibility that the person will perform an abnormal behavior. More specifically, as indicated by rule ID = 1 in FIG. 6, for example, it is assumed that the relation between a person detected from a video image and a cardboard box is the person "holding" the cardboard box. In this case, the information processing device 10 can determine that the cardboard box may be a target of an abnormal behavior, which is a waste product, a suspicious object, or the like, and there is a possibility that the person will perform an abnormal behavior, for example.

Further, in a case where the relation "holding" between the person and the cardboard box is dissolved in a video image chronologically later than the video image, the information processing device 10 can determine that the person has placed the cardboard box in a position, for example. In other words, a warning target can be set by notifying an alert or the like that there is a possibility that the placement of the cardboard box may be illegal dumping or placement of a suspicious object.

Furthermore, if the action of placement of the cardboard box is seen in the video image, the information processing device 10 can specify the location of the placement of the cardboard box. However, even in a case where the action of placement of the cardboard box is not seen in the video image, the information processing device 10 can estimate the location of placement of the cardboard box from the location of the installation of the camera device 100 that has captured the video image in which the relation between the person and the object is specified, for example. More specifically, referring to FIG. 1, it is assumed that the relation "holding" between the person and the cardboard box is specified from a video image captured by the camera device 110-4, but the relation is dissolved in a video image captured by the camera device 110-7, for example. In this case, the information processing device 10 can determine that the cardboard box has been placed in an area (the position at which the person P is located in FIG. 1, for example) between the imaging range of the camera device 110-4 and the imaging range of the camera device 110-7, for example.

Note that, as a mode of an abnormal behavior such as illegal dumping or placement of a suspicious object, a person may carry and place a waste product or a suspicious object while directly carrying the waste product or the suspicious object, or may carry and place a waste product or a suspicious object on a cart or the like, for example. Therefore, as indicated by rule ID = 2 in FIG. 6, for example, in a case where the relation between a person detected from a video image and a cart is the person "pushing" the cart, the information processing device 10 can determine that there is a possibility that the person will perform an abnormal behavior, for example. Alternatively, the cardboard box placed on the cart may be a waste product, a suspicious object, or the like, for example. Therefore, as indicated by rule ID = 3 in FIG. 6, for example, in a case where the relation between a cardboard box placed on a cart and a person is "carrying", the information processing device 10 can determine that there is a possibility that the person will perform an abnormal behavior, for example. As described above, the relations between a person and an object, which might lead to an abnormal behavior and should be noted, are set in the rule DB 16, so that whether or not there is a possibility that the person may perform an abnormal behavior can be determined from a relation between a person and an object detected from a video image. Note that the information set in the rule DB 16 illustrated in FIG. 6 is merely an example, and the set information is not limited to this.

Also, the above information stored in the storage unit 12 is merely an example, and the storage unit 12 may store various kinds of information other than the above information.

The control unit 20 is a processing unit that is in charge of overall control of the information processing device 10, and is a processor or the like, for example. The control unit 20 includes an acquisition unit 21, a specification unit 22, a determination unit 23, and a notification unit 24. Note that each of the processing units is an example of an electronic circuit included in a processor, or an example of processing to be performed by the processor.

The acquisition unit 21 acquires, from the imaging DB 13, video images obtained by imaging the inside of any one of various facilities such as a factory by the one or more camera devices 100, for example. Note that video images captured by the camera devices 100 are transmitted to the information processing device 10 by the camera devices 100 as needed, are received by the information processing device 10, and are stored into the imaging DB 13.

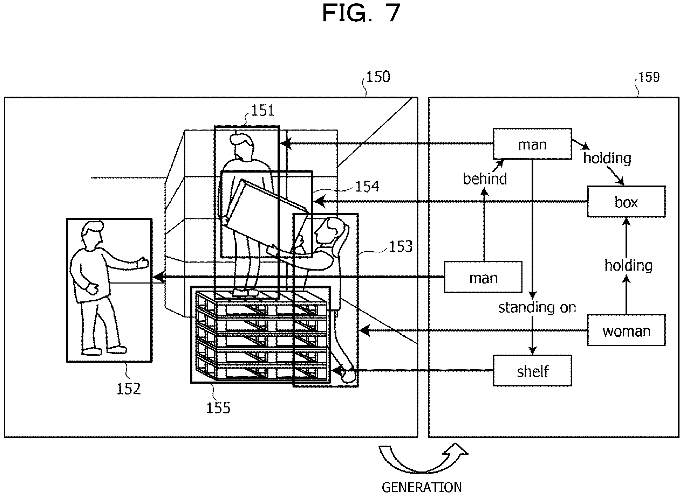

The specification unit 22 analyzes the video images acquired by the acquisition unit 21, to specify a relation identifying an interaction between an object and a person included in the video images, for example. Note that the object and the person included in the video images may be a first region including an object and a second region including a person, respectively, for example. Also, the first region and the second region may be bounding boxes (Bboxes), for example. Further, the relations to be specified may include types of relations such as a person holding, pushing, or carrying an object, for example. Furthermore, such a specification process may include processing of generating a scene graph in which the first region, the second region, and the relation are specified for each person included in the video images, by inputting the video images acquired by the acquisition unit 21 to a machine learning model, for example. The generation of the scene graph is described below in greater detail, with reference to FIG. 7.

FIG. 7 is a diagram illustrating an example of relation specification based on a scene graph according to the present embodiment. It is assumed that a captured image 150 in FIG. 7 is one frame of a video image captured by a camera device 100, for example. The specification unit 22 detects, from the captured image 150, objects including persons using an existing detection algorithm, estimates relations among the respective objects, and generates a scene graph 159 that expresses the respective objects and the relations among those objects, which is context, for example. Here, the existing detection algorithm is YOU only look once (YOLO), single shot multibox detector (SSD), region based convolutional neural networks (R-CNN), or the like, for example.

In the example in FIG. 7, from the captured image 150, at least two men indicated by Bboxes 151 and 152, a woman indicated by a Bbox 153, a box indicated by a Bbox 154, and a shelf indicated by a Bbox 155 are detected. Then, the specification unit 22 then extracts a Bbox region of each object including a person from the captured image 150, extracts a feature amount of each region, estimates relations among the respective objects from the feature amounts of pairs of objects (Subject and Object), and generates the scene graph 159, for example. In FIG. 7, the scene graph 159 indicates a relation in which the man indicated by the Bbox 151 is standing on the shelf indicated by the Bbox 155, for example. Also, for example, the relation regarding the man indicated by the Bbox 151 illustrated in the scene graph 159 is not limited to one. As illustrated in FIG. 7, in the scene graph 159, all estimated relations such as being behind the man indicated by the Bbox 152 and holding the box indicated by the Bbox 154, in addition to the shelf, are indicated. By generating a scene graph in this manner, the specification unit 22 can specify the relations between the objects and the persons included in a video image.

However, since a scene graph has a problem, the specification unit 22 can more accurately specify the relations between objects and persons included in a video image, by solving the problem.

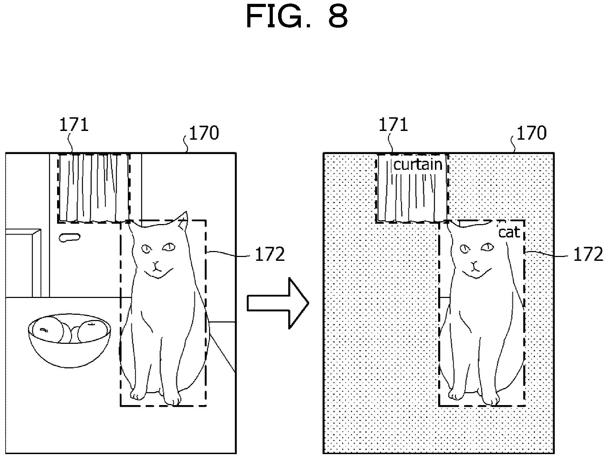

FIG. 8 is a diagram for explaining a problem in scene graph generation. In generation of a scene graph, as illustrated in FIG. 8, each object is extracted from a captured image 170, for example. Therefore, there are cases where information that is important in terms of context but is present outside the regions of a Bbox 171 of a Subject and a Bbox 172 of an Object is overlooked. More specifically, as illustrated on the right side in FIG. 8, although the respective regions of the Bbox 171 of a curtain and the Bbox 172 of a cat are extracted, information regarding the regions other than those regions is not used in estimating a relation between the cat and the curtain. Therefore, even if there is information important for estimating the relation between the cat and the curtain, the information is overlooked. For example, by looking at objects around the cat and the curtain, and the room structure, it is possible to estimate that the curtain is behind the cat. In general scene graph generation, however, information regarding the surroundings is not used in estimating the relation between the cat and the curtain. Therefore, by using information regarding the surroundings in estimating a relation between objects, it is possible to more accurately specify the relation. For example, in the example in FIG. 8, from the captured image 170, it is possible to estimate a relation such that an apple is next to a cat, there is a high possibility that there is a table under the cat and the apple, a curtain is behind the cat because the curtain is hung over a door, and the like.

Therefore, in the present embodiment, contextually important regions are adaptively extracted from an entire image for each Subject and Object that are the targets of relation estimation, and the relation between the targets is recognized. The extraction of the important regions to recognize a relation is performed by generating a map that takes a value of zero to one according to the degree of importance, for example (this map will be hereinafter referred to as "Attention map").

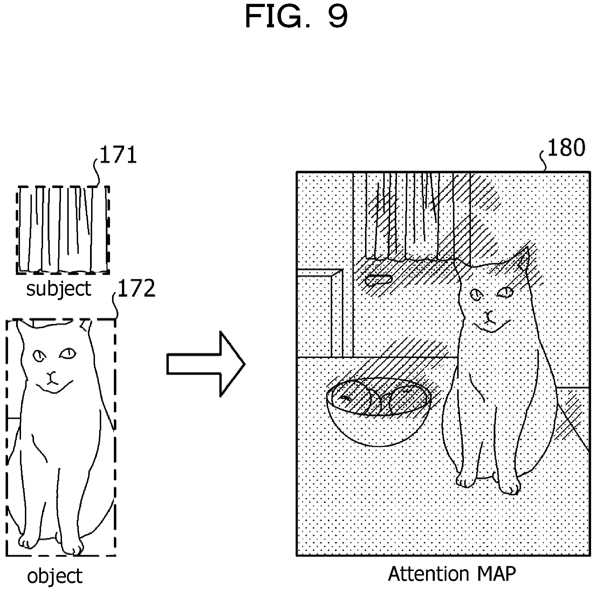

FIG. 9 is a diagram illustrating an example of Attention map generation according to the present embodiment. As illustrated in FIG. 9, when estimating a relation between the curtain that is the Subject and the cat that is the Object, for example, the specification unit 22 generates an Attention map 180 expressing important regions other than the regions of the Bboxes 171 and 172, and uses the Attention map 180 to estimate the relation. The Attention map 180 is generated with a machine learning model that is trained and generated using feature amounts of objects detected from a captured image as input data, and important regions in the image as correct labels, for example, so that the rate of recognizing a relation between the objects becomes higher. Also, as illustrated in FIG. 9, in the Attention map 180, the degrees of importance of the regions that are important in estimating the relation between the Subject and the Object are expressed by colors, shades, or the like, for example. Note that, since it is not recognized in advance where the contextually important regions are in the captured image, the specification unit 22 generates the Attention map 180 for an entire image, for example. As a result, the specification unit 22 can more accurately extract the contextually important regions, and accordingly, more accurately specify a relation between objects.

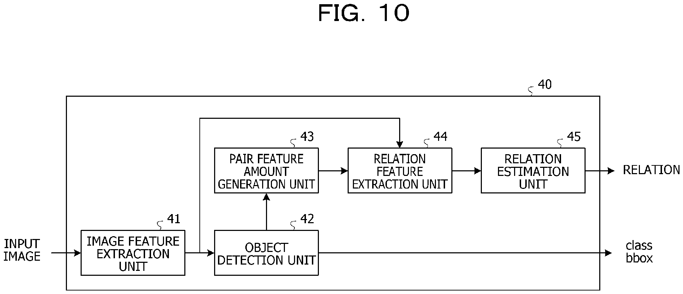

Estimation of a relation between the respective objects using the Attention map 180 is more specifically described with reference to FIGs. 10 to 15. Estimation of a relation between the respective objects using the Attention map 180 may be performed using a neural network (NN), for example.

FIG. 10 is a diagram illustrating an example of an NN configuration for estimating a relation according to the present embodiment. As illustrated in FIG. 10, an NN 40 for estimating a relation between the respective objects using the Attention map 180 includes an image feature extraction unit 41, an object detection unit 42, a pair feature amount generation unit 43, a relation feature extraction unit 44, and a relation estimation unit 45, for example. For example, when a video image obtained by imaging a scene, which is a captured image, is input, the NN 40 performs processing starting from the one by the image feature extraction unit 41, and outputs the Bboxes of objects detected by the object detection unit 42 and the types (classes) of the objects. Also, the NN 40 outputs relations among the respective objects detected by the object detection unit 42, the relations having been estimated by the relation estimation unit 45. Each of such processes to be performed by the respective processing units included in the NN 40 is now described.

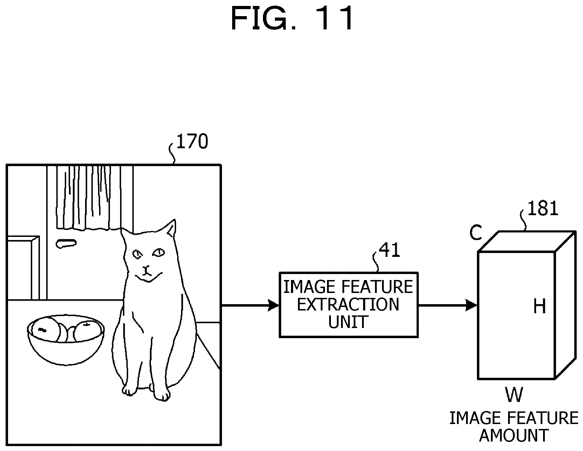

First, feature extraction from a captured image by the image feature extraction unit 41 is described. FIG. 11 is a diagram illustrating an example of image feature extraction according to the present embodiment. As illustrated in FIG. 11, the image feature extraction unit 41 extracts an image feature amount 181 of a C channel from the captured image 170 of an RGB3 channel, for example. Note that the image feature extraction unit 41 may be formed with a convolutional neural network (CNN), a Transformer, or the like, which is an existing technology, for example. Further, it is possible to use a CNN or a Transformer that has been trained beforehand with Classification tasks or the like using a large-scale image dataset such as ImageNet. Furthermore, the width W and the height H of the image feature amount are normally smaller than the width and the height of the input image, which is the captured image 170 in the example in FIG. 11, because of a CNN or a Pooling process.

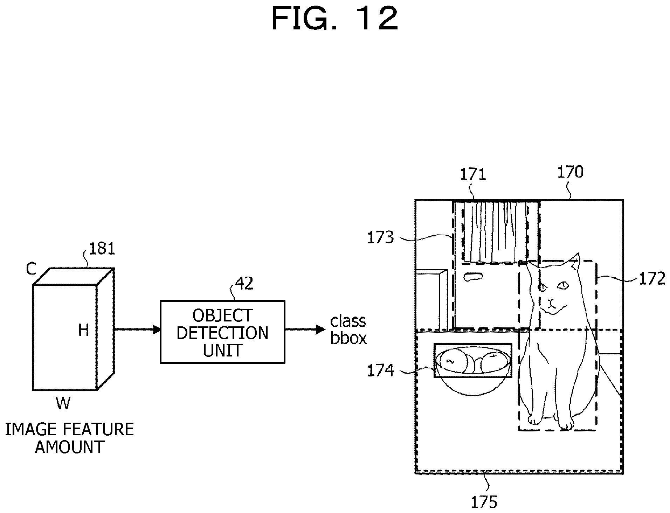

Next, object detection from the image feature amount by the object detection unit 42 is described. FIG. 12 is a diagram illustrating an example of object detection according to the present embodiment. As illustrated in FIG. 12, the object detection unit 42 receives the image feature amount 181 extracted by the image feature extraction unit 41, and outputs the Bboxes 171 to 175 of the respective objects included in the captured image 170 and classes indicating the types of the objects, for example. Note that, in the example in FIG. 12, the Bboxes 171 to 175 are indicated as bbox. Also, as for an example output, as illustrated on the right side in FIG. 12, the object detection unit 42 can draw the Bboxes 171 to 174 of the respective detected objects over the captured image, for example, and output the resultant. Further, classes indicating the types of the respective objects, such as a curtain or a cat, may be output to the vicinity of each Bbox.

Note that the rectangle of a Bbox can be expressed by four real values such as upper left coordinates (x₁, y₂) and lower right coordinates (x₂, y₂) of the rectangle, for example. Also, a class that is output from the object detection unit 42 is the value of a probability that an object detected with a Bbox is a predetermined object to be detected, for example. More specifically, in a case where the objects to be detected are (a cat, a table, and a car), for example, in the example in FIG. 12, the class of the Bbox 172 corresponding to the cat is the values of probabilities indicating the respective objects to be detected, such as (0.9, 0.1, and 0.2). In other words, the class in this case indicates that the probabilities that the detected object is the cat, the table (table), and the car (car) are 0.9, 0.1, and 0.2, respectively. Note that the object detection unit 42 may be formed with faster region based convolutional neural networks (R-CNN), Mask R-CNN, Detection Transformer (DETR), or the like, which is a NN for object detection according to an existing technology, for example.

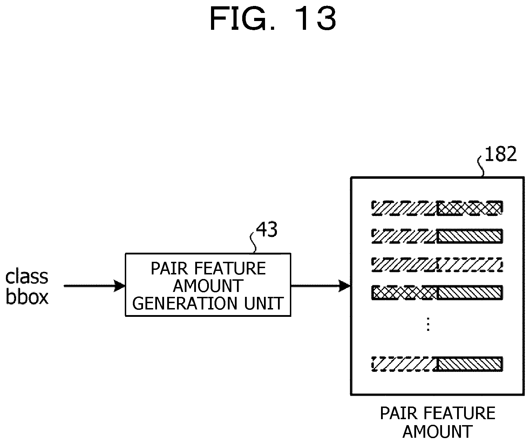

Next, the feature amount of each pair of detected objects as generated by the pair feature amount generation unit 43 is described. FIG. 13 is a diagram illustrating an example of pair feature amount generation according to the present embodiment. As illustrated in FIG. 13, the pair feature amount generation unit 43 extracts the feature amount of each of the objects detected by the object detection unit 42, which is the feature amount of each of the objects detected based on the output classes and Bboxes, for example. At this point of time, the pair feature amount generation unit 43 can use RoIAlign in the Mask R-CNN or the like. Further, in a case where the object detection unit 42 is formed with a DETR, the feature amounts of the respective objects output by the Transformer Decoder can be used without any change. Furthermore, an extracted feature amount may be a real vector of 256 dimensions or the like, for example, for each object.

Then, the pair feature amount generation unit 43 then pairs one object as the Subject with another object as the Object, among all combinations of all the detected objects. A pair feature amount 182 indicated on the right side in FIG. 13 is an array of feature amounts of the respective pairs of the Subject and the Object. Also, to adjust the number of dimensions of the pair feature amount 182, the pair feature amount generation unit 43 may convert the feature amounts of the pairs of Subjects and the Objects with a multi layer perceptron (MLP), which is an existing technology.

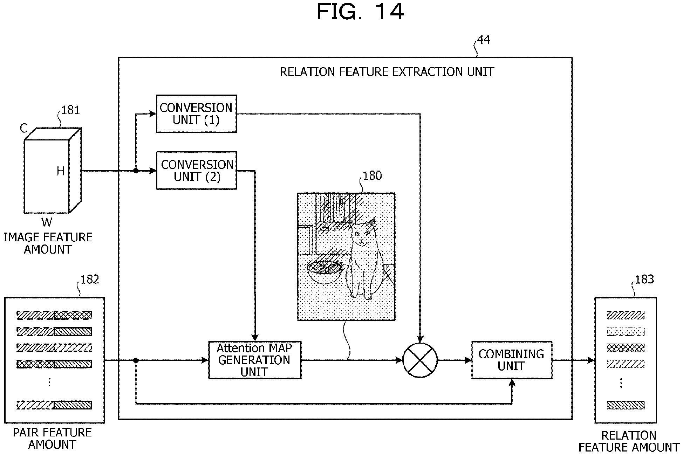

Next, extraction of the feature amounts indicating the relations between the detected and paired objects is described, the extraction being performed by the relation feature extraction unit 44. FIG. 14 is a diagram illustrating an example of relation feature extraction according to the present embodiment. As illustrated in FIG. 14, the relation feature extraction unit 44 includes a conversion unit (1), a conversion unit (2), an Attention map generation unit, and a combining unit, for example.

First, as illustrated in FIG. 14, the relation feature extraction unit 44 converts the image feature amount 181 extracted by the image feature extraction unit 41, using each of the conversion unit (1) and the conversion unit (2), so as to use the image feature amount 181 in the subsequent processes. The conversion unit (1) and the conversion unit (2) may be formed with Multi Layer Perceptrons (MLPs) or the like, for example. Also, in the example in FIG. 14, formed with MLPs having different weights, the conversion unit (1) and the conversion unit (2) are distinguished from each other.

Next, the relation feature extraction unit 44 uses the Attention map generation unit to generate the Attention map 180 by correlating the image feature amount converted by the conversion unit (1) with each line of the pair feature amount 182 generated by the pair feature amount generation unit 43. Note that, each line of the pair feature amount 182 means each pair of a Subject and an Object. Also, the relation feature extraction unit 44 may convert the Attention map 180 with a MLP or Layer Normalization, after correlating the pair feature amount 182 with the image feature amount converted by the conversion unit (1).

Here, the process of correlating one pair feature amount 182 with an image feature amount converted by the conversion unit (1) is more specifically described. Note that it is assumed that the pair feature amount 182 has been adjusted to a C-dimensional vector through processing in a previous stage. Also, it is assumed that the image feature amount converted by the conversion unit (1) is a H × W tensor, the channel direction of which is a C dimension. Further, attention is paid to a pixel (x, y) having an image feature amount converted by the conversion unit (1), and this pixel is set as the attention pixel. Since the attention pixel is 1 × 1 × C, the attention pixel can be assumed as a C-dimensional vector. Then, the Attention map generation unit then correlates the C-dimensional vector of the attention pixel with the pair feature amount 182 adjusted to the C-dimensional vector, and calculates a correlation value (scalar). As a result, the correlation value of the attention pixel (x, y) is determined. The Attention map generation unit performs this process on all the pixels, and generates the Attention map 180 of H × W × 1.

Then, the relation feature extraction unit 44 then obtains a weighted sum by multiplying the generated Attention map 180 by the image feature amount converted by the conversion unit (2), to extract the feature amount of the important region in the entire image corresponding to the pairs of a Subject and an Object. Note that, since the weighted sum is obtained for the entire image, the feature amount taking the weighted sum is a C-dimensional feature amount for a single pair of a Subject and an Object.

Also, the weighted sum of the Attention map 180 and the image feature amount converted by the conversion unit (2) is more specifically described. Note that it is assumed that the image feature amount converted by the conversion unit (2) is a tensor of H × W × C. First, the relation feature extraction unit 44 multiplies the Attention map 180 by the image feature amount converted by the conversion unit (2). At this point of time, the Attention map 180 is H × W × 1, and therefore, a channel is copied into C dimensions. Also, the relation feature extraction unit 44 adds all the C-dimensional vectors of the respective pixels for the multiplied values. As a result, a single C-dimensional vector is generated. In other words, the single C-dimensional vector is generated for each Attention map 180. Further, Attention maps 180 as many as pair feature amounts 182 are generated in practice, and accordingly, C-dimensional vectors to be created as many as the pair feature amounts 182 are generated. Through the above process, the relation feature extraction unit 44 obtains the weighted sum using the Attention map 180 as a weight, with respect to the image feature amount converted by the conversion unit (2).

Then, the relation feature extraction unit 44 then uses the combining unit to combine the feature amount of the important region extracted by the Attention map 180 and the pair feature amount 182 generated by the pair feature amount generation unit 43, and outputs the synthesized result as a relation feature amount 183. More specifically, the relation feature extraction unit 44 can use the feature amount of the important region combined with the pair feature amount 182 in the dimension direction. Also, the relation feature extraction unit 44 may convert the combined feature amounts to adjust the number of dimensions with a MLP or the like, after combining the feature amount of the important region and the pair feature amount 182.

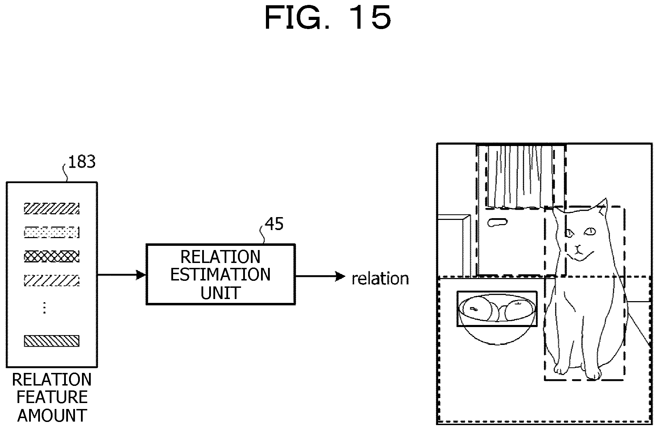

Next, estimation of the relation of each pair of a Subject and an Object is described, the estimation being performed by the relation estimation unit 45. FIG. 15 is a diagram illustrating an example of relation estimation according to the present embodiment. The relation estimation unit 45 receives the relation feature amount 183 that is output from the relation feature extraction unit 44, and outputs a relation corresponding to each pair of a Subject and an Object. Note that the relation estimation unit 45 may be formed with a MLP, Batch Normalization, or the like, which is an existing technology, for example. Further, the relations to be output are the values of probabilities that the relations are predetermined relations to be estimated. Specifically, in a case where the relations to be estimated are (on, behind, and holding), for example, probability values with respect to the respective relations, such as (0,1, 0.9, and 0.2), are output as relations between the curtain and the car in the example in FIG. 15. Further, in this case, the specification unit 22 can specify "behind" with the highest probability value as the relation between the curtain and the cat.

The respective processes for estimating a relation between the respective objects using the Attention map 180 as described above are summarized as processing for specifying a relation between the respective objects, which is to be performed by the specification unit 22 using the NN 40.

First, the specification unit 22 extracts, from a video image, a first feature amount corresponding to the first region including an object included in the video image or a second region including a person included in the video image, for example. Note that the video image may be a video image obtained by a camera device 100 imaging the inside of any one of various facilities such as a factory, for example, and the first region and the second region may be Bboxes. Also, such an extraction process corresponds to the process performed by the image feature extraction unit 41 to extract the image feature amount 181 from the captured image 170, as described above with reference to FIG. 11. In other words, in the example in FIG. 11, the captured image 170 corresponds to the video image, and the image feature amount 181 corresponds to the first feature amount.

Next, the specification unit 22 detects an object and a person included in the video image from the extracted first feature amount, for example. Such processing of detecting an object and a person corresponds to the process performed by the object detection unit 42 to detect Bboxes and classes of the object and the person from the image feature amount 181 corresponding to the first feature amount, as described above with reference to FIG. 12.

Next, the specification unit 22 generates a second feature amount obtained by combining a plurality of objects, a plurality of persons, and the first feature amount of the object or the person in at least one pair of an object and a person, for example. Such a generation process corresponds to processing performed by the pair feature amount generation unit 43 to generate the pair feature amount 182 in which the respective feature amounts of the detected object and person corresponding to the first feature amount are arrayed for the respective pairs, as described above with reference to FIG. 13. In other words, in the example in FIG. 13, the pair feature amount 182 corresponds to the second feature amount.

Next, the specification unit 22 generates a first map indicating a relation identifying at least one interaction between a plurality of objects, a plurality of persons, and an object and a person, based on the first feature amount and the second feature amount, for example. Such a generation process corresponds to processing performed by the relation feature extraction unit 44 to generate the Attention map 180 based on the image feature amount 181 corresponding to the first feature amount and the pair feature amount 182 corresponding to the second feature amount, as described above with reference to FIG. 14. In other words, in the example in FIG. 14, the Attention map 180 corresponds to the first map.

Next, the specification unit 22 extracts a fourth feature amount based on a third feature amount obtained by converting the first feature amount and the first map, for example. Such an extraction process corresponds to processing performed by the relation feature extraction unit 44 to extract the relation feature amount 183 based on the feature amount converted by the conversion unit (2) and the Attention map 180 corresponding to the first map, as described above with reference to FIG. 14. In other words, in the example in FIG. 14, the feature amount converted by the conversion unit (2) is the feature amount obtained by converting the image feature amount 181 corresponding to the first feature amount by the conversion unit (2) and corresponds to the third feature amount, and the relation feature amount 183 corresponds to the fourth feature amount.

Then, the specification unit 22 then specifies a relation identifying an interaction between an object and a person, from the fourth feature amount, for example. Such a specification process corresponds to processing performed by the relation estimation unit 45 to estimate and specify a relation between an object and a person, from the relation feature amount 183 corresponding to the fourth feature amount, as described above with reference to FIG. 15.

Also, the specification unit 22 specifies, with respect to a first object, a first person whose relation between a specified object and person transitions chronologically from a first relation to a second relation, based on a video image acquired by the acquisition unit 21. Here, the first object is the target of an abnormal behavior, which is an object having a possibility of being a waste product, a suspicious object, or the like, and the first person is a person having a possibility of having performed an abnormal behavior, for example. Alternatively, the first object is an article left behind or a lost article reported by a person, for example.

Meanwhile, it is assumed that a relation of a cardboard box, which is an example of a person and an object detected from a video image, is a person "holding" the cardboard box, for example, and this relation is set as the first relation. Also, it is assumed that "holding" as the relation between the person and the cardboard box is dissolved in a video image chronologically later than the video image in which the first relation is specified, for example, and the relation between the person and the cardboard, between which such a relation "holding" is dissolved, is set as the second relation.

Then, the specification unit 22 then specifies, as the first person, a person whose relation between a person and an object specified from a video image transitions chronologically from the first relation to the second relation, such as a person who used to hold a cardboard box but no longer holds the cardboard box, for example. This is to identify the person as the first person who has a possibility of having performed an abnormal behavior on the assumption that there is a possibility that the cardboard box the person used to hold is a waste product or a suspicious object, and the cardboard box has been disposed somewhere, which is that there is a possibility that the person has performed an abnormal behavior. Note that, by analyzing a scene graph, for example, the specification unit 22 can also specify the first relation and the second relation, and specify the first person.

Also, the specification unit 22 specifies a first area in which an abnormality has occurred in the first object, based on the camera device 100 that has performing imaging, for example. More specifically, the specification unit 22 specifies the first area in which an abnormality has occurred in the first object, from the installation location of the camera device 100 that has captured the video image in which the relation between the first person and the first object is specified and the imaging range thereof, for example.

Also, the specification unit 22 generates skeletal information about a person included in a video image by analyzing the video image acquired by the acquisition unit 21, for example, and specifies a relation identifying an interaction between an object and the person included in the video image, based on the generated skeletal information. More specifically, the specification unit 22 extracts the bounding box (Bbox) rectangularly surrounding a region including a person from a video image acquired by the acquisition unit 21, for example. Then, the specification unit 22 then generates skeletal information by inputting the image data of the extracted Bbox of the person to a trained machine learning model constructed by an existing algorithm such as DeepPose or OpenPose, for example.

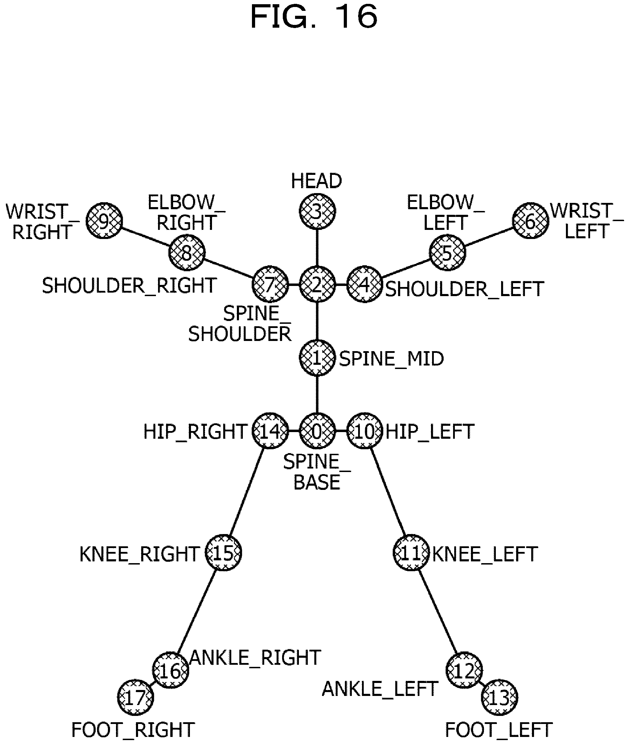

FIG. 16 is a diagram illustrating an example of skeletal information according to the present embodiment. As the skeletal information, eighteen pieces (numbers 0 to 17) of definition information in which respective joints specified in a known skeleton model are numbered can be used. For example, number 7 is assigned to the right shoulder joint (SHOULDER_RIGHT), number 5 is assigned to the left elbow joint (ELBOW_LEFT), number 11 is assigned to the left knee joint (KNEE_LEFT), and number 14 is assigned to the right hip joint (HIP_RIGHT). Accordingly, coordinate information about the 18 skeletons illustrated in FIG. 16 can be acquired from the image data, and "X-coordinate = X7, Y-coordinate = Y7, Z-coordinate = Z7" is acquired as the location of the right shoulder joint of number 7, for example. Note that the Z-axis may be defined as a distance direction from the imaging device toward the object, the Y-axis may be defined as a height direction perpendicular to the Z-axis, and the X-axis may be defined as a horizontal direction, for example.

Also, the specification unit 22 can also determine a posture of the whole body of a person, such as standing, walking, crouching, sitting, or sleeping, using a machine learning model that has been trained beforehand with skeletal patterns, for example. For example, the specification unit 22 can determine the closest whole-body posture, using a machine learning model that has been trained with an angle between some joints by Multi Layer Perceptron as in the skeletal information in FIG. 16 or an aesthetics diagram.

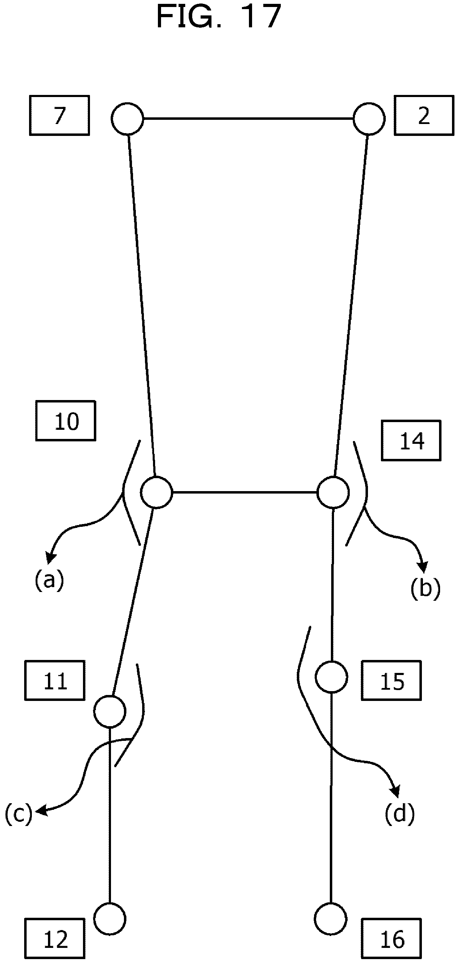

FIG. 17 is a diagram illustrating an example of whole-body posture determination according to the present embodiment. As illustrated in FIG. 17, the specification unit 22 acquires an angle (a) of the joint between "HIP_LEFT" of number 10 and "KNEE_LEFT" of number 11, and an angle (b) of the joint between "HIP_RIGHT" of number 14 and "KNEE_RIGHT of number 15, for example. Further, the specification unit 22 can detect the posture of the whole body of the person by acquiring an angle (c) of "KNEE_LEFT" of number 11, an angle (d) of "KNEE_RIGHT" of number 15, and the like, for example.

Also, the specification unit 22 can detect motion of each part by determining the postures of parts, based on a 3D joint posture of the body, for example. More specifically, the specification unit 22 can perform conversion from 2D joint coordinates to 3D joint coordinates, using an existing algorithm such as a 3D-baseline technique, for example.

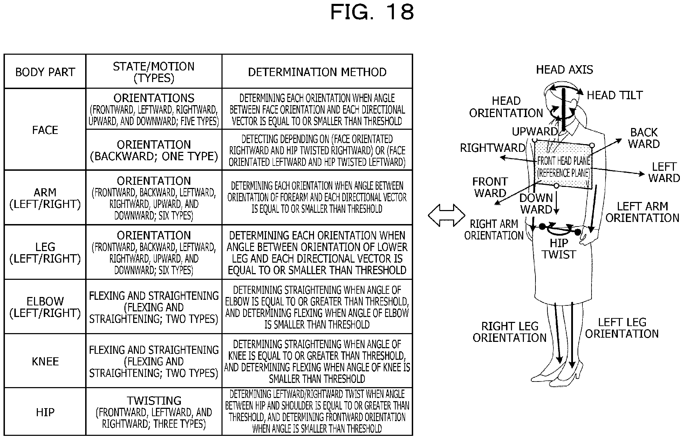

FIG. 18 is a diagram illustrating an example of detection of motion of each part according to the present embodiment. As illustrated in FIG. 18, as for the "face" part, the specification unit 22 can detect which one of the frontward, leftward, rightward, upward, and downward orientations (five types) the face orientation is, depending on whether or not the angle between the face orientation and each directional vector is equal to or smaller than a threshold, for example. Note that the specification unit 22 specifies the face orientation, using a vector defined by "start point: midpoint of both ears, end point: nose", for example. Also, the specification unit 22 can detect whether or not the face is orientated backward, with "the face is orientated rightward, and the hip is twisted rightward" or "the face is orientated leftward, and the hip is twisted leftward", for example.

Also, as for the "arm" parts, the specification unit 22 can detect which one of the frontward, backward, leftward, rightward, upward, and downward orientations (six types) the orientations of the right and left arms are, based on whether or not the angle between the orientation of the forearm and each directional vector is equal to or smaller than a threshold, for example. Note that the specification unit 22 can detect the orientations of the arms with a vector defined by "start point: elbow, end point: wrist", for example.

Also, as for the "leg" parts, the specification unit 22 can detect which one of the frontward, backward, leftward, rightward, upward, and downward orientations (six types) the orientations of the right and left legs are, based on whether or not the angle between the orientation of the lower legs and each directional vector is equal to or smaller than a threshold, for example. Note that the specification unit 22 can detect the orientations of the lower legs with a vector defined by "start point: knee, end point: ankle", for example.

Also, the specification unit 22 can detect that an "elbow" part is straightened when the angle of the elbow is equal to or greater than a threshold, and that the part "elbow" is flexed when the angle of the elbow is smaller than the threshold (two types), for example. Note that specification unit 22 can detect the angle of the elbow based on an angle formed by a vector A "start point: elbow, end point: shoulder" and a vector B "start point: elbow, end point: wrist", for example.

Also, the specification unit 22 can detect that a "knee" part is straightened when the angle of the knee is equal to or greater than a threshold, and that the part "knee" is flexed when the angle of the knee is smaller than the threshold (two types), for example. Note that specification unit 22 can detect the angle of the knee based on an angle formed by a vector A "start point: knee, end point: ankle" and a vector B "start point: knee, end point: hip", for example.

Further, as for the "hip" part, the specification unit 22 can detect left and right twists (two types) when the angle between the hip and the shoulder is equal to or greater than a threshold, and detect that the "hip" part faces frontward when the angle is smaller than the threshold, for example. Also, the specification unit 22 can detect the angle between the hip and the shoulder from the rotation angle about an axis vector C "start point: midpoint between both sides of the hip: end point: midpoint of both shoulders", for example. Note that the angle between the hip and the shoulder is detected for each of a vector A "start point: left shoulder, end point: right shoulder" and a vector B "start point: left hip (hip (L)), end point: right hip (hip (R))", for example.

Also, the specification unit 22 specifies the location of a person included in each of video images captured by the respective camera devices of a plurality of camera devices 100 with a first index that is different for each camera device of the plurality of camera devices 100, for example. The first index is an image coordinate system in which the coordinates of the upper left pixel of an image that is one frame of a video image captured by a camera device 100 are the origin (0, 0), for example. Since the image coordinate system is different for each camera device of the plurality of camera devices 100, the same position is not indicated in the real space even if the coordinates are the same among the images captured by the plurality of camera devices 100. Therefore, the specification unit 22 specifies the position of the person specified with the first index, with a second index that is the same for the plurality of camera devices 100, for example. The second index is a coordinate system that is the same for the plurality of camera devices 100 and is obtained by transforming the image coordinate system, which is the first index, using a projective transform (homography) coefficient, for example, and will be hereinafter referred to as the "floor map coordinate system" as opposed to the image coordinate system. The transform from the image coordinate system to the floor map coordinate system is now described more specifically.

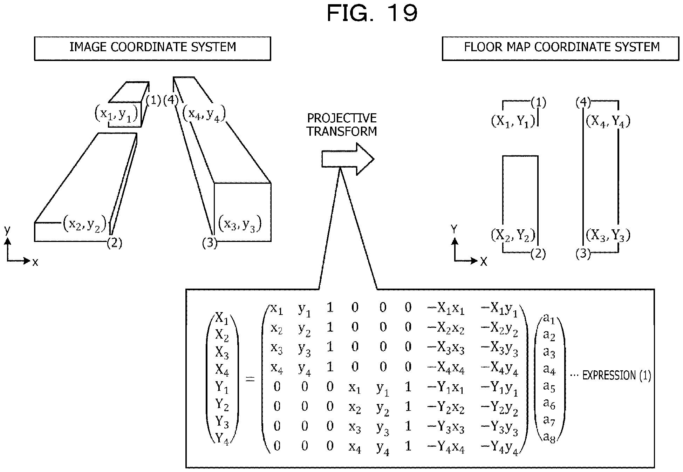

First, calculation of a projective transform coefficient to be used for a transform from the image coordinate system to the floor map coordinate system is described. FIG. 19 is a diagram illustrating an example of projective transform coefficient calculation according to the present embodiment. As illustrated in FIG. 19, the specification unit 22 specifies appropriate corresponding points (1) to (4) between the image coordinate system and the floor map coordinate system, for example. The specification unit 22 specifies a point (x₁, y₁), a point (x₂, y₂), a point (x₃, y₃), and a point (x₄, y₄) from the image coordinate system, for example. Likewise, the specification unit 22 specifies a point (X₁, Y₁), a point (X₂, Y₂), a point (X₃, Y₃), and a point (X₄, Y₄) from the floor map coordinate system, for example. Then, the specification unit 22 then calculates a projective transform coefficient aᵢ (i = 1 to 8) for transform from the image coordinate system (x, y) to the floor map coordinate system (X, Y) by solving a system of equations indicated by Expression (1) in FIG. 19, for example. Note that the layout and configuration of the camera devices 100 and the floor configuration of the inside of any one of various facilities such as a factory are usually fixed, performing estimation of the projective transform coefficient once is sufficient. Further, the corresponding points may be designated by an administrator or the like of the information processing system 1, or the points at the same locations may be specified as the corresponding points through image analysis.

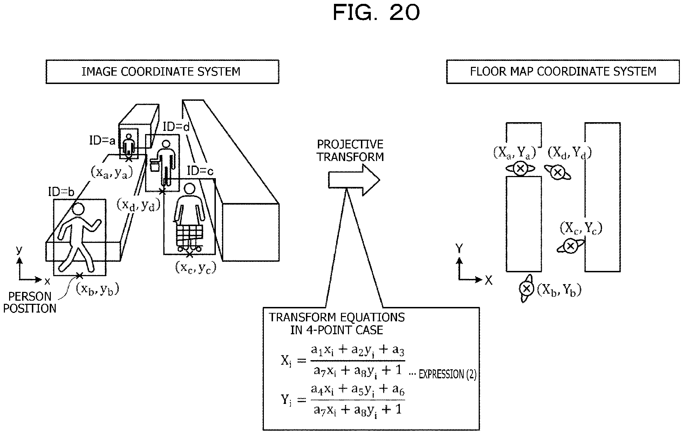

Then, the specification unit 22 then converts the position of a person specified in the image coordinate system to a position in the floor map coordinate system, using the calculated projective transform coefficient, and specifies the position, for example. FIG. 20 is a diagram illustrating an example of transform from the image coordinate system to the floor map coordinate system according to the present embodiment. As illustrated in FIG. 20, the specification unit 22 sets the image coordinates (x, y) at the center of the lower end of the Bbox of each person as the position of a person specified in the image coordinate system, and calculates floor map coordinates (X, Y) by transforming the coordinates using the projective transform coefficient, for example. Note that the floor map coordinates (X, Y) are coordinates that indicate the positions of the persons in the floor map coordinate system, and are the same for the plurality of camera devices 100. In the example in FIG. 20, the respective points (xₐ, yₐ) to (x_{d}, y_{d}) indicating the positions of the persons specified in the image coordinate system are converted into points (Xₐ, Yₐ) to (X_{d}, Y_{d}) indicating the positions of the persons in the floor map coordinate system, using the transform equations illustrated as Equation (2) in FIG. 20, for example.

Returning to the description with reference to FIG. 4, the determination unit 23 determines whether or not the first object is placed outside the imaging ranges of the camera devices 100, based on the relation identifying the interaction between the object and the person that are included in the video image and have been specified by the specification unit 22, for example.

More specifically, the determination unit 23 analyzes the video image acquired by the acquisition unit 21, for example, to determine whether or not the object having an interaction with the person included in the video image is the first object. In a case where the relation between the person and the object included in the video image is "holding", for example, the determination unit 23 determines that the object is the first object that has a possibility of being the target of an abnormal behavior, which is a waste product, a suspicious object, or the like.

Also, in a case where the object having an interaction with the person is determined to be the first object, for example, the determination unit 23 determines whether or not the person is carrying the first object, based on the first relation that is a relation between the person specified by the specification unit 22 and the first object. In a case where the first relation is "holding" or "carrying", for example, the determination unit 23 determines that the person is carrying the first object. Information such as the first relation to be used in such determination may be stored in the rule DB 16, for example. Note that there may be a case where a waste product, a suspicious object, or the like is carried on a cart. In this case, the relation between the person and the cart is specified as "pushing", and the relation between the object placed on the cart and the person is specified as "carrying" by the specification unit 22, for example. Accordingly, the determination unit 23 can determine that the person is carrying the first object placed on the cart.

Further, in a case where it is determined, based on the first relation, that the person is carrying the first object, for example, the determination unit 23 determines whether or not the person is carrying the first object, based on the second relation that is a relation between the person specified by the specification unit 22 and the first object. In a case where "holding", "carrying", or the like, which is the first relation between the person and the first object, has been dissolved, for example, the determination unit 23 sets the relation between the person and the object having the first relation dissolved as the second relation, and determines that the person is not carrying the first object.

Further, in a case where it is determined, based on the second relation, that the person is not carrying the first object, for example, the determination unit 23 determines that the first object is placed outside the imaging ranges of the camera devices 100. In other words, in a case where it is determined that the person is not carrying the first object after it is determined that the person is carrying the first object, for example, the determination unit 23 can determine that the first object is placed somewhere. In particular, in a case where it is determined that the person is not carrying the first object, for example, if the first object or an action of placing the first object appears in any of the video images captured by the camera devices 100, it can be determined that the first object has been placed, and the placement location can also be specified. If not, however, the determination unit 23 determines that the first object is placed outside the imaging ranges of the camera devices 100, for example.

Also, the determination unit 23 determines whether or not the persons included in the respective video images are the same persons, based on the positions of the persons specified by the specification unit 22 using the second index, for example. The second index is the floor map coordinate system that is the same for the plurality of camera devices 100, for example. Therefore, in a case where the floor map coordinate system indicated by the positions of the persons included in the respective video images captured by the plurality of camera devices 100 is the same or within a predetermined range and in the vicinity, for example, the determination unit 23 can determine that the persons included in the respective video images are the same persons.

Returning to the description with reference to FIG. 4, the notification unit 24 issues an alert, based on a result of the determination as to whether or not the first object is placed outside the imaging ranges of the camera devices 110, for example. In a case where it is determined that the first object is placed outside the imaging ranges of the camera devices 110, for example, the notification unit 24 issues an alert. The alert may be a voice output, a message notification on a screen, or the like, for example. Further, an alert issuance destination may be an output device included in the information processing device 10, an external device, or another output device or the like communicably coupled to the information processing device 10 via the network 50, for example.

Further, in a case where it is determined that the first object is placed outside the imaging ranges of the camera devices 110, for example, the notification unit 24 issues an alert indicating that the first person has performed an abnormal behavior. Note that the first person is the person specified, by the specification unit 22, as a person who has a possibility of having performed an abnormal behavior, for example. Also, the alert may include an image or a video image of the first person, and information regarding positions such as the location at which the first person is present, and the like, for example.

Also, the notification unit 24 issues an alert indicating that an abnormality has occurred in the first object in association with the first area, for example. Note that the first area is an area specified, by the specification unit 22, as an area in which there is a possibility that an abnormality has occurred in the first object, for example. Further, the alert may include information regarding the location of the first area, and the like, for example.

### (Flow of Processing)

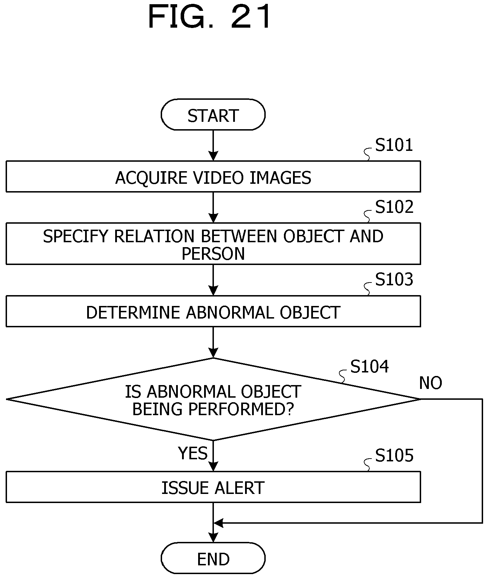

Next, the flow of an abnormal behavior notification process to be performed by the information processing device 10 is described. FIG. 21 is a flowchart illustrating the flow of the abnormal behavior notification process according to the present embodiment.

First, as illustrated in FIG. 21, the information processing device 10 acquires, from the imaging DB 13, video images obtained by imaging predetermined imaging ranges in any one of various facilities such as a factory by the camera devices 100, for example (step S101). Note that the video images captured by the camera devices 100 are transmitted from the camera devices 100 to the information processing device 10 as needed, and are stored into the imaging DB 13. Specifically, the information processing device 10 acquires a plurality of video images captured by a plurality of the camera devices 100 installed in a facility and obtained by causing the plurality of camera devices 100 to capture different areas, for example.

Next, the information processing device 10 inputs the video images acquired in step S101 to a machine learning model, for example, and specifies, from a video image, a region including an object, a region including a person, and a relation between the object and the person (step S102). Note that the regions including the object and the person may be bounding boxes (Bboxes) each surrounding the object or the person in the video image in a rectangle. Further, the relation between the object and the person may be the person holding, pushing, carrying the object, or the like, for example. Specifically, the person appears in the first area, for example. Then, the person then moves to the second area through an area outside the imaging ranges of the camera devices 100. At this point of time, the information processing device 10 analyzes the video image capturing the first area among the plurality of acquired video images, to identify the first relation identifying the interaction between the object and the person included in the video image. Also, the information processing device 10 analyzes the video image capturing the second area among the plurality of acquired video images, to identify the second relation identifying the interaction between the object and the person included in the video image. Note that the time of the video image capturing the second area is a time later than the time of the video image capturing the first area.

Next, the information processing device 10 determines whether or not the person is performing an abnormal behavior, for example, based on the relation between the object and the person specified in step S102 (step S103). Specifically, if it is determined, based on the first relation, that the person is carrying the first object in the first area, the information processing device 10 determines whether or not the person is carrying the first object in the second area, based on the second relation. Note that, an abnormal behavior herein means, for example, an action of placing an object outside the imaging ranges of the camera devices 100, such as a discarded object, a suspicious object, an article left behind, a lost article, or the like. If it is determined that the person is not performing an abnormal behavior (step S104: No), the abnormal behavior notification process illustrated in FIG. 21 comes to an end.

If it is determined that the person is performing an abnormal behavior (step S104: Yes), on the other hand, the information processing device 10 issues an alert (step S105). Specifically, the information processing device 10 issues an alert when it is determined that the person is not carrying the first object in the second area. For example, the information processing device 10 notifies the terminals of an alert indicating that an object related to one of a discarded object, a suspicious object, an article left behind, and a lost article is placed and associated with an area that is located between the first area and the second area and outside the imaging ranges of the camera devices 100. After the execution of step S105, the abnormal behavior notification process illustrated in FIG. 21 comes to an end.

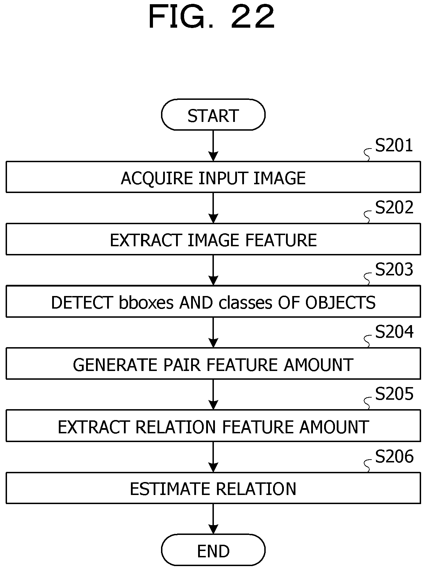

Next, the flow of a relation estimation process to be performed by the information processing device 10 is described. FIG. 22 is a flowchart illustrating the flow of the relation estimation process according to the present embodiment. The relation estimation process illustrated in FIG. 22 is processing of estimating a relation between an object and a person, using the NN 40 described above with reference to FIGs. 10 to 15, for example.

First, the information processing device 10 acquires, from the imaging DB 13, an input image that is a video image obtained by a camera device 100 imaging a predetermined imaging range in any one of various facilities such as a factory, for example (step S201). Note that the input image includes an image of one frame of a video image, and, in a case where the input image is stored as a video image in the imaging DB 13, one frame is acquired as the input image from the video image.

Next, the information processing device 10 extracts the image feature amount 181 as an image feature of the input image, from the input image acquired in step S201, for example (step S202).

Next, the information processing device 10 detects, from the image feature amount 181 extracted in step S202, Bboxes indicating the locations of the respective objects included in the video image and classes indicating the types of the respective objects, using an existing technology, for example (step S203). Note that a person may be included among the respective objects detected here, and a person may be included among the respective objects in the description below.

Next, the information processing device 10 generates the second feature amount obtained by combining the first feature amount of each object in each pair of the objects detected in step S203, as the pair feature amount 182, for example (step S204).

Next, the information processing device 10 combines the feature amount of an important region for relation estimation as extracted by the Attention map 180 with the pair feature amount 182, for example, and extracts the relation feature amount 183 (step S205). Note that the Attention map 180 is generated from the pair feature amount 182 extracted in step S204.

Then, the information processing device 10 then estimates a relation of each object detected from the image, based on the relation feature amount 183 extracted in step S205, for example (step S206). Note that estimation of a relation may be calculation of a probability value for each type of relations, for example. After the execution of step S206, the relation estimation process illustrated in FIG. 22 comes to an end.

### (Effects)

As described above, the information processing device 10 acquires a video image captured by one or more camera devices 100, analyzes the acquired video image to specify a relation identifying an interaction between an object and a person included in the video image, determines whether or not the first object is placed outside the imaging range of the camera device 100 based on the specified relation, and issues an alert based on a result of the determination as to whether or not the first object is placed outside the imaging range.

In this manner, the information processing device 10 specifies a relation between an object and a person from a video image, determines whether or not the object is placed outside the imaging range of the camera device 100 based on the specified relation, and issues an alert. Thus, the information processing device 10 can more accurately determine and notify that a person is performing an abnormal behavior, from a video image.

Also, the information processing device 10 specifies, based on the acquired video image, the first person whose specified relation with the first object transitions chronologically from the first relation to the second relation, and the alert issuance process to be performed by the information processing device 10 includes processing of issuing an alert indicating that an object related to one of a discarded object, a suspicious object, an article left behind, and a lost article is placed in an area outside the imaging range of the camera device 100, in a case where it is determined that the first object is placed outside the imaging range.

Thus, the information processing device 10 can more accurately determine that a person is performing an abnormal behavior, from a video image.

Also, the information processing device 10 analyzes the acquired video image, to determine whether or not an object having an interaction with the person is the first object. In a case where the object having an interaction with the person is determined to be the first object, the information processing device 10 determines whether or not the person is carrying the first object, based on the first relation of specified relations. In a case where it is determined, based on the first relation, that the person is carrying the first object, the information processing device 10 determines whether or not the person is carrying the first object, based on the second relation of the specified relations. The processing to be performed by the information processing device 10 to determine whether or not the first object is placed outside the capturing range includes a process of determining that the first object is placed outside the imaging range in a case where it is determined, based on the second relation, that the person is not carrying the first object.

Thus, the information processing device 10 can more accurately determine that a person is performing an abnormal behavior, from a video image.

Also, the information processing device 10 acquires a plurality of video images that are images captured by a plurality of camera devices 100 placed in a facility and are obtained by causing the plurality of camera devices 100 to image difference areas, identifies the first relation of relations by analyzing the video image obtained by imaging the first area among the plurality of acquired video images, identifies the second relation of the relations by analyzing the video image obtained by imaging the second area among the plurality of acquired video images, and determines whether or not a person is carrying the first object in the second area based on the second relation in a case where it is determined that the person is carrying the first object in the first area based on the first relation. The alert issuance process to be performed by the information processing device 10 includes processing of notifying terminals of an alert indicating that the first object is placed and associated with a third area that is located between the first area and the second area and outside the imaging ranges of the plurality of camera devices 100, when it is determined that the person is not carrying the first object in the second area.

Thus, the information processing device 10 can more accurately notify that a person is performing an abnormal behavior, from a video image.

Further, the processing to be performed by the information processing device 10 to specify the first person includes processing of specifying the first person by inputting the acquired video image to a machine learning model to generate a scene graph specifying a relation for each person included in the video images, and analyzing the scene graph.

Thus, the information processing device 10 can more accurately determine that a person is performing an abnormal behavior, from a video image.

Also, the processing to be performed by the information processing device 10 to specify a relation includes processing of: extracting the first feature amount corresponding to an object or a person from a video image; detecting objects and persons included in the video image from the extracted first feature amount; generating the second feature amount obtained by combining a plurality of detected objects, a plurality of detected persons, and the first feature amount of the object or the person in at least one pair of an object and a person; generating the first map indicating the plurality of objects, the plurality of persons, and a relation identifying at least one interaction between an object and a person, based on the first feature amount and the second feature amount; extracting the fourth feature amount based on the third feature amount obtained by converting the first feature amount, and the first map; and extracting a relation from the fourth feature amount.

Thus, the information processing device 10 can more accurately determine that a person is performing an abnormal behavior, from a video image.

Further, the processing to be performed by the information processing device 10 to specify a relation includes processing of generating skeletal information about a person by analyzing the acquired video image, and specifying a relation based on the generated skeletal information.

Thus, the information processing device 10 can more accurately determine that a person is performing an abnormal behavior, from a video image.

Also, the information processing device 10 specifies the position of a person included in each of the video images captured by the respective camera devices of a plurality of camera devices 100, using a first index that is different for each camera device of the plurality of camera devices 100, specifies the position of the person specified with the first index, using a second index that is the same for the plurality of camera devices 100, and determines whether or not the person included in each of the video images is the same person, based on the position of the person specified with the second index.

Thus, the information processing device 10 can more accurately determine that a person is performing an abnormal behavior, from a video image.

Also, the information processing device 10 acquires biometric information about a person based on detection of the biometric information about the person who is passing through a gate and is captured by a sensor or a camera installed at a gate placed at a predetermined location in a facility. When authentication of the acquired biometric information about the person is successful, the information processing device 10 analyzes an image including the person passing through the gate, to identify the person included in the image as a person who has checked in at the facility, and tracks the person, with identification information about the person specified from the biometric information being associated with the person.

Thus, the information processing device 10 can more accurately determine that a person is performing an abnormal behavior, from a video image.

Further, the processing to be performed by the information processing device 10 to issue an alert includes processing of issuing an alert indicating that an abnormal object is placed in the facility, together with the identification information about the tracked person, in a case where it is determined that the tracked person has placed the first object outside the imaging range.

Thus, the information processing device 10 can more accurately determine that a person is performing an abnormal behavior, from a video image.

Furthermore, the facility is any one of a factory, a store, and an office, the gate is located at the entrance of the facility, and the information processing device 10 determines that authentication based on the biometric information about the person is successful when the acquired biometric information about the person is registered as information about a target person who has permission to enter the facility.

Thus, the information processing device 10 can more accurately determine that a person is performing an abnormal behavior, from a video image.

Alternatively, the facility is either a railroad facility or an airport, the gate is located at a ticket gate of the railway facility or a counter or an inspection area in the airport, and the information processing device 10 determines that authentication based on the biometric information about the person is successful when the acquired biometric information about the person is registered beforehand as a passenger to be allowed on a train or an airplane.

Thus, the information processing device 10 can more accurately determine that a person is performing an abnormal behavior, from a video image.

### (Example Applications)

Next, example applications are described with reference to FIG. 1 and FIG. 2. The information processing device 10 can analyze behaviors of a person who has checked in, using images captured by a plurality of camera devices 100. The facility is a railroad facility, an airport, a factory, a store, an office, or the like. Further, a gate provided in the facility is located at an entrance of a store, a factory, or an office, a ticket gate of a railroad facility, a counter in an airport, or the like.

First, an example in which an object to be checked in is a railroad facility or an airport is described. In the case of a railroad facility or an airport, a gate is located at a ticket gate of the railway facility, or a counter or an immigration checking area in the airport. In this case, the information processing device 10 determines that authentication based on the biometric information about a person is successful, when the biometric information about the person is pre-registered as a passenger to be allowed on a train or an airplane.

Next, an example in which a check-in target is a factory, a store, or an office is described. In the case of a factory, a store, or an office, a gate is located at an entrance of the factory, the store, or the office. In this case, when biometric information about a person is registered as a member to be allowed in the facility as a check-in, the information processing device 10 determines that authentication based on the biometric information about the person is successful. For example, when biometric information about a person is registered as a target person having permission to enter the factory, the store, or the office as a check-in, the information processing device 10 determines that authentication based on the biometric information about the person is successful.

Here, details of a check-in are described. The information processing device 10 acquires, from a biometric sensor, a vein image or the like obtained by a vein sensor, for example, and performs authentication. As a result, an ID, the name, and the like of the subject who is to check in are specified.

In doing so, the information processing device 10 acquires an image of the subject who is to check in using the information processing device 10. Next, the information processing device 10 detects a person from images. The information processing device 10 tracks the person detected from images captured by a plurality of camera devices 100 across frames. At this point of time, the information processing device 10 associates the ID and the name of the subject who is to check in with the person to be tracked.

Here, referring back to FIG. 1, the example applications are described. At the time of a check-in, the information processing device 10 acquires biometric information about a person passing through a gate provided at a predetermined location in the facility. Specifically, the information processing device 10 acquires, from a biometric sensor, a vein image or the like acquired by the biometric sensor that is installed at a gate provided at an entrance in the facility and is a vein sensor, for example, and performs authentication. At this point of time, the information processing device 10 specifies the ID and the name associated with the biometric information. The information processing device 10 specifies the ID and the name of the person P from the biometric information.

Note that the biometric sensor is installed at the gate provided at a predetermined location in the facility, and detects the biometric information about the person passing through the gate. Also, the plurality of camera devices 100 is installed on the ceiling of a store. Further, the information processing device 10 may perform authentication by acquiring biometric information based on a face image captured by a camera mounted on a gate provided at an entrance in the store, instead of a biometric sensor.

Next, the information processing device 10 determines whether or not the authentication based on the biometric information about the person has succeeded. In a case where the authentication is successful, the information processing device 10 analyzes the image including the person passing through the gate, to identify the person included in the image as a person who has checked in at the facility. Then, the information processing device 10 then associates identification information about the person specified from the biometric information with the identified person, and stores the associated pieces of information into the storage unit 12.

After that, the information processing device 10 tracks the person, the identification information about the person specified from the biometric information being associated with the person. Specifically, when tracking the person, the information processing device 10 associates the ID and the name of the subject who is to check in with the identified person, and stores the associated pieces of information into the storage unit 12.

Note that, in a case where it is determined that the tracked person has placed a predetermined object outside the imaging range, for example, the information processing device 10 issues, together with the identification about the tracked person, an alert indicating that an abnormal object is placed in the facility. For example, the alert is information indicating that the person P has left or lost something in the facility, in addition to the ID and the name of the person P. Also, the alert is information indicating illegal dumping or placement of a suspicious object by the person P, in addition to the ID and the name of the person P, for example.

Thus, the information processing device 10 can detect an abnormal behavior of the person P in a blind spot for the imaging ranges of the camera devices 110. Specifically, when a behavior of the person P mislaying baggage, a behavior of the person P losing baggage, a behavior of the person P conducting illegally dumping or placement of a suspicious object occurs in the facility, it is possible to detect that the person who has performed the behavior is the person P.

### (System)

Pieces of information including the processing procedures, the control procedures, the specific names, the various types of data, and the parameters described above or illustrated in the drawings may be changed as appropriate, unless otherwise specified. Also, the specific examples, distributions, numerical values, and the like described in the embodiment are merely examples, and may be changed as appropriate.

Further, specific forms of distribution and integration of components of each device are not limited to the forms illustrated in the drawings. That is, all or some of the components may be functionally or physically distributed or integrated in optional units, depending on various kinds of loads, use situations, or the like. Furthermore, all or any one of the respective processing functions of each device can be implemented by a central processing unit (CPU) and a program to be analyzed and executed by the CPU, or can be implemented as hardware by wired logic.

### (Hardware)

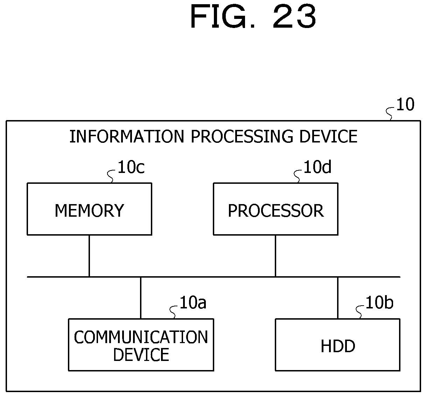

FIG. 23 is a diagram for explaining an example hardware configuration of the information processing device 10. As illustrated in FIG. 23, the information processing device 10 includes a communication device 10a, a hard disk drive (HDD) 10b, a memory 10c, and a processor 10d. Further, the respective components illustrated in FIG. 23 are coupled to one another by a bus or the like.

The communication device 10a is a network interface card or the like, and communicates with another information processing device. The HDD 10b stores a program for activating the functions illustrated in FIG. 4 and databases (DBs).

The processor 10d is a hardware circuit that reads, from the HDD 10b or the like, a program for performing processes similar to those to be performed by the respective processing units illustrated in FIG. 4, and loads it into the memory 10c, to perform processing of implementing the respective functions described with reference to FIG. 4 and others. In other words, this process implements functions similar to those of the respective processing units included in the information processing device 10. Specifically, the processor 10d reads a program having functions similar to those of the acquisition unit 21, the specification unit 22, the determination unit 23, the notification unit 24, and the like, from the HDD 10b or the like. Then, the processor 10d then executes the processing for performing processes similar to those to be performed by the specification unit 22 and the like.

In this manner, the information processing device 10 operates as an information processing device that performs an operation control process by reading and executing the program for performing processes similar to those to be performed by the respective processing units illustrated in FIG. 4. Also, the information processing device 10 may implement functions similar to those of the examples described above by reading a program from a recording medium with a medium reading device and executing the read program. Note that the program in this other example is not necessarily a program to be executed by the information processing device 10. For example, in a case where another information processing device executes the program, and a case where the information processing device 10 and the another information processing device execute the program in cooperation, the present embodiment may also be adopted.

Further, the program for performing processes similar to those to be performed by the respective processing units illustrated in FIG. 4 may be distributed via a network such as the Internet. Furthermore, this program may be recorded on a computer-readable recording medium such as a hard disk, a flexible disk (FD), a CD-ROM, a magneto-optical disk (MO), or a digital versatile disc (DVD), and may be executed after read from the recording medium by a computer.

## Claims

1. An information processing program comprising instructions which, when executed by a computer, cause the computer to execute processing comprising:
acquiring a video image captured by one or more camera devices;
specifying, by analyzing the acquired video image, a relation that identifies an interaction between an object and a person included in the video image; determining, based on the specified relation, whether a first object is placed outside an imaging range of the camera device; and
issuing an alert, based on a determination result obtained by the determining of whether the first object is placed outside the imaging range.

2. The information processing program according to claim 1, wherein the processing further comprises specifying a first person whose specified relation with the first object transitions chronologically from a first relation to a second relation, based on the acquired video image, and
the issuing of the alert includes
issuing the alert that indicates that an object related to one of a discarded object, a suspicious object, an article left behind, or a lost article is placed in an area outside the imaging range of the camera device, when the determination result indicates that the first object is placed outside the imaging range.

3. The information processing program according to claim 1 or 2, wherein the processing further comprises:
analyzing the acquired video image, to determine whether or not the object that has an interaction with the person is the first object;
determining whether or not the person is carrying the first object based on a first relation of the specified relation, when the object that has an interaction with the person is determined to be the first object; and
determining whether or not the person is carrying the first object based on a second relation of the specified relation, when it is determined, based on the first relation, that the person is carrying the first object, and
the determining of whether the first object is placed outside the imaging range includes
determining that the first object is placed outside the imaging range, in a case where it is determined, based on the second relation, that the person is not carrying the first object.

4. The information processing program according to claim 1 or 2, wherein the processing further comprises:
acquiring a plurality of video images that is captured by a plurality of camera devices provided in a facility and obtained by causing the plurality of camera devices to image different areas;
analyzing a video image that captures a first area among the plurality of acquired video images, to identify a first relation of the relation;
analyzing a video image that captures a second area among the plurality of acquired video images, to identify a second relation of the relation; and,
when it is determined, based on the first relation, that the person is carrying the first object in the first area, determining whether or not the person is carrying the first object in the second area based on the second relation, and
the issuing of the alert includes
notifying a terminal of the alert that indicates that the first object is placed in association with a third area that is located between the first area and the second area and outside imaging ranges of the plurality of camera devices, when it is determined that the first object is not being carried in the second area.

5. The information processing program according to claim 2, wherein
the processing further comprises:
inputting the acquired video image to a machine learning model, to generate a scene graph that specifies the relation for each of the persons included in the video image; and
analyzing the scene graph, to identify the first person.

6. The information processing program according to claim 1 or 2, wherein
the specifying of the relation includes:
extracting a first feature amount that corresponds to the object or the person, from the video image;
detecting the object and the person included in the video image, from the extracted first feature amount;
generating a second feature amount obtained by combining a plurality of the detected objects, a plurality of the persons, and the first feature amount of the object or the person in at least one pair of the object and the person;
generating a first map that indicates the relation that identifies at least one interaction among a plurality of the objects, among a plurality of the persons, and between the object and the person, based on the first feature amount and the second feature amount;
extracting a fourth feature amount, based on a third feature amount obtained by converting the first feature amount, and the first map; and
specifying the relation from the fourth feature amount.

7. The information processing program according to claim 1 or 2, wherein
the specifying of the relation includes:
analyzing the acquired video image, to generate skeletal information about the person; and
specifying the relation, based on the generated skeletal information.

8. The information processing program according to claim 1 or 2, wherein
the processing comprises:
specifying a position of the person included in each of the video images captured by the respective camera devices of a plurality of the camera devices, using a first index that is different for each camera device of the plurality of the camera devices;
specifying the position of the person specified with the first index, using a second index that is the same for the plurality of the camera devices; and
determining whether or not the person included in each of the video images is the same person, based on the position of the person specified with the second index.

9. The information processing program according to claim 1, wherein
the processing comprises:
acquiring biometric information about the person, based on detection, by a sensor or a camera, of the biometric information about the person who passes through a gate that is provided at a predetermined location in a facility and on which the sensor or the camera is mounted;
analyzing an image that includes the person who passes through the gate when authentication based on the acquired biometric information about the person is successful, to identify the person included in the image as a person who has checked in at the facility; and
tracking the person in a state where identification information about the person specified from the biometric information is associated with the person.

10. The information processing program according to claim 9, wherein
the issuing of the alert includes:
issuing an alert that indicates that an abnormal object is placed in the facility, together with identification information about the tracked person, when it is determined that the tracked person has placed the first object outside the imaging range.

11. The information processing program according to claim 9, wherein
the gate is provided at an entrance of the facility, and
the processing comprises determining that authentication based on the biometric information about the person has succeeded, when the acquired biometric information about the person is registered as a target person who has permission to enter the facility.

12. The information processing program according to claim 9, wherein
the facility is one of a railroad facility or an airport,
the gate is provided at a ticket gate of the railroad facility, or at a counter or an inspection area in the airport, and,
the processing comprises determining that authentication based on the biometric information about the person has succeeded, when the acquired biometric information about the person is registered beforehand as a passenger to be allowed on a train or an airplane.

13. An information processing method implemented by a computer, the information processing method comprising:
acquiring a video image captured by one or more camera devices;
specifying, by analyzing the acquired video image, a relation that identifies an interaction between an object and a person included in the video image;
determining, based on the specified relation, whether a first object is placed outside an imaging range of the camera device; and
issuing an alert, based on a determination result obtained by the determining of whether the first object is placed outside the imaging range.

14. An information processing apparatus comprising a control unit configured to perform processing comprising:
acquiring a video image captured by one or more camera devices;
specifying, by analyzing the acquired video image, a relation that identifies an interaction between an object and a person included in the video image; determining, based on the specified relation, whether a first object is placed outside an imaging range of the camera device; and
issuing an alert, based on a determination result obtained by the determining of whether the first object is placed outside the imaging range.
